# EUROPÄISCHE PATENTANMELDUNG

(11) **EP 4 560 807 A1**
(43) Veröffentlichungstag der Anmeldung: **28.05.2025**
(21) Anmeldenummer: 23212053.5
(22) Anmeldetag: 24.11.2023
(51) Int. Cl.: H01M 50/213, H01M 50/227, H01M 50/244

(54) **ZELLHALTER ZUR HALTERUNG VON ENERGIESPEICHERELEMENTEN IN EINEM BATTERIEMODUL UND VERFAHREN**

(71) Anmelder: VARTA Microbattery GmbH, 73479 Ellwangen Jagst (DE)
(72) Erfinder: Faass, Andreas, 86756 Reimlingen (DE); Hahn, Rainer, 73489 Jagstzell (DE); Hoffmann, Tim, 86720 Nördlingen (DE); Magg, Manfred, 86316 Friedberg (DE); Olteanu, Klaus, Brasov Ghimbav (RO); Rauwolf, Andreas, 86742 Fremdingen (DE); Schnirch, Harald, 73463 Westhausen-Reichenbach (DE); Wiedeman, Tristan, 86199 Augsburg (DE)
(74) Vertreter: Ostertag & Partner Patentanwälte mbB

(57) **Zusammenfassung**

Es wird ein Zellhalter zur Halterung von einer Mehrzahl von Energiespeicherelementen (10) in einem Batteriemodul vorgeschlagen. Der Zellhalter umfasst einen ersten Zellhalterrahmen (101) und zweiten Zellhalterrahmen (102). Der erste Zellhalterrahmen (101) und der zweite Zellhalterrahmen (102) weisen jeweils mindestens einen Aufnahmebereich zur Halterung der Energiespeicherelemente (10) auf. Der erste Zellhalterrahmen (101) weist mindestens eine Auftragskavität (110) zur Befüllung mit Klebstoff auf. Der Zellhalter zeichnet sich weiter dadurch aus, dass der erste Zellhalterrahmen (101) mindestens eine Durchgangsöffnung (112) für Klebstoff aufweist und dass der zweite Zellhalterrahmen (102) mindestens einen Auffangkavität (120) zur Aufnahme von Klebstoff aufweist. Die Auffangkavität (120) ist zur Außenseite des zweiten Zellhalterrahmens (102) geschlossen. Mit diesem Zellhalter kann eine Verklebung der Energiespeicherzellen in dem Zellhalter mit einem einseitigen Klebstoffauftrag erfolgen.

## Beschreibung

Die vorliegende Erfindung betrifft einen zweiteiligen Zellhalter zur Halterung von einer Mehrzahl von Energiespeicherelementen in einem Batteriemodul, ein Verfahren zur Fixierung von Energiespeicherelementen in einem zweiteiligen Zellhalter, einen Verbund von einem zweiteiligen Zellhalter mit einer Mehrzahl von Energiespeicherelementen sowie ein Batteriemodul.

### ANWENDUNGSGEBIET UND STAND DER TECHNIK

Bei Batteriemodulen handelt es sich in der Regel um wieder aufladbare, elektrische Energiespeicher, die beispielsweise in automobilen Anwendungen, aber auch in vielen anderen Bereichen eingesetzt werden. In einem Batteriemodul werden eine Vielzahl einzelner elektrochemischer Energiespeicherelemente (elektrochemische Zellen) zusammengeschaltet, um so die für verschiedene Anwendungen erforderlichen Ströme und Spannungen bereitstellen zu können.

Jedes elektrochemisches Energiespeicherelement im Sinne der vorliegenden Anmeldung umfasst mindestens eine positive und mindestens eine negative Elektrode, welche durch einen Separator voneinander getrennt sind. In elektrochemischen Energiespeicherelementen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine andere Teilreaktion läuft bei vergleichsweise hohem Redoxpotential an der positiven Elektrode ab. Bei der Entladung werden an der negativen Elektrode durch einen Oxidationsprozess Elektronen freigesetzt. Dies resultiert in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb des elektrochemischen Energiespeicherelements. Dieser lonenstrom durchquert den Separator und wird durch einen ionenleitenden Elektrolyten gewährleistet.

In sekundären (wieder aufladbaren) elektrochemischen Energiespeicherelementen ist diese Entladereaktion reversibel, es besteht also die Möglichkeit, die bei der Entladung erfolgte Umwandlung der chemischen Energie in elektrische Energie wieder umzukehren.

Eine in Batteriemodulen oftmals verwendetes elektrochemisches Energiespeicherelement ist die Lithium-lonen-Zelle. Die Lithium-Ionen-Zelle umfasst Elektroden, die Lithium-Ionen reversibel aufnehmen und wieder abgeben können, sowie einen Lithium-Ionen enthaltenden Elektrolyten.

Bei elektrochemischen Energiespeicherelementen und insbesondere auch bei Lithium-lonen-Zellen sind verschiedene Bauformen bekannt. Neben prismatischen Formen sind Knopfzellen und zylindrische Rundzellen weit verbreitet. Sowohl Knopfzellen als auch Rundzellen haben eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist. Für die Herstellung von Batteriemodulen eignen sich vor allem sowohl prismatische Energiespeicherelemente als auch zylindrische Rundzellen.

Zur Halterung und Fixierung der Energiespeicherelemente innerhalb eines Batteriemoduls sind oftmals sogenannte Zellhalter vorgesehen. Die Zellhalter, die oftmals aus Kunststoff hergestellt sein, können die Energiespeicherelemente nach Art eines Rahmens umfassen. Wenn das Batteriemodul beispielsweise eine quaderförmige Gestalt aufweist, kann an beiden Flachseiten des Batteriemoduls jeweils ein rahmenartiges Zellhalterteil vorgesehen sein, das die endständigen Bereiche der zwischen den Zellhalterrahmen angeordneten Energiespeicherelemente hält und fixiert. Hierfür sind in der Regel entsprechend ausgeformte Aufnahmen innerhalb der Zellhalterteile vorgesehen. Die Energiespeicherelemente werden in diese Aufnahmen eingesetzt und in der Regel mit dem Zellhalter verklebt.

Für die elektrische Kontaktierung der Energiespeicherelemente innerhalb des Batteriemoduls werden üblicherweise Ableiterelemente eingesetzt, beispielsweise streifenförmige Metallbleche, die im Bereich der Zellhalter angeordnet sind und die mit den Polen der Energiespeicherelemente verbunden werden.

Beispielsweise zeigt die WO 2021/254941 A1 ein Batteriemodul mit einem zweiteiligen Zellhalter, bei dem die einzelnen Energiespeicherelemente in kreisförmige Aufnahmen der beiden Zellhalterteile eingesetzt sind.

Die chinesische Gebrauchsmusterschrift CN 205231143 U zeigt einen zweiteiligen Zellhalter. In jedem Zellhalterteil sind mehrere Klebstoffinjektionslöcher vorgesehen, über die der Klebstoff eingebracht werden kann. Der Klebstoff gelangt hierüber in die Aufnahmebereiche für die Energiespeicherelemente und wird dort verteilt, um die Energiespeicherelemente zu fixieren.

Die Verklebung der Energiespeicherelemente mit den Zellhalterteilen ist verhältnismäßig aufwändig. Nach dem Einsetzen und dem Positionieren der einzelnen Energiespeicherelemente in den entsprechenden Aufnahmen der Zellhalterteile werden üblicherweise die einzelnen Energiespeicherelemente mittels einer automatischen Dosiereinrichtung sequenziell in das jeweilige Zellhalterteil eingeklebt. Der hierfür erforderliche Klebstoff kann vor oder nach dem Einsetzen der Energiespeicherelemente in das Zellhalterteil punktuell hinzugefügt werden. Für das Einsetzen und das Verkleben der Energiespeicherelemente in dem Zellhalter sind daher eine Vielzahl von Positionier- und Dosieroperationen notwendig.

Weiterhin ist es in der Regel erforderlich, dass die Anordnung mit den Energiespeicherelementen und den Zellhalterteilen während der Montage gewendet wird, um die Verklebung sowohl auf der einen Seite als auch auf der anderen Seite der Energiespeicherelemente vornehmen zu können. Insgesamt ist daher die Verklebung der Energiespeicherelemente bei der Montage des Batteriemoduls mit einem hohen Zeitaufwand verbunden.

Das häufige Unterbrechen der Klebstoffzufuhr vor der Dosiernadel, welches für die verschiedenen Dosieroperationen notwendig ist, führt zu einem erhöhten Verschleiß der Klebstoffzufuhrvorrichtung. Zudem besteht durch die häufigen Dosieroperationen ein erhöhtes Risiko, dass der Klebstoff unkontrolliert nachtropft. Aus diesen verschiedenen Gründen sind daher die bisher üblichen Klebeverfahren bei der Montage von Batteriemodulen unbefriedigend.

### AUFGABE UND LÖSUNG

Die Erfindung stellt sich demgegenüber die Aufgabe, ein vereinfachtes Verfahren zur Herstellung eines Batteriemoduls bereitzustellen. Insbesondere soll dabei der Aufwand für die Verklebung der Energiespeicherelemente in dem Zellhalter bei der Montage des Batteriemoduls reduziert werden. Der Klebevorgang soll mit weniger Arbeitsschritten und schneller erfolgen, um so insgesamt den erforderlichen Aufwand für die Montage des Batteriemoduls reduzieren zu können. Gleichzeitig soll eine sichere und zuverlässige Fixierung der Energiespeicherelemente in dem Zellhalter erzielt werden.

Diese Aufgabe wird durch einen Zellhalter gelöst, wie er sich aus dem Anspruch 1 ergibt. Bevorzugte Ausführungsformen des Zellhalters sind Gegenstand der von Anspruch 1 abhängigen Ansprüche. Weiterhin wird diese Aufgabe durch ein Verfahren zur Fixierung von Energiespeicherelementen in einem zweiteiligen Zellhalter, durch einen Verbund von einem Zellhalter mit einer Mehrzahl von Energiespeicherelementen sowie durch ein Batteriemodul gelöst, wie es sich aus den weiteren nebengeordneten Ansprüchen ergibt. Bevorzugte Ausgestaltungen dieser Aspekte der Erfindung sind Gegenstand der weiteren abhängigen Ansprüche.

Der erfindungsgemäße Zellhalter ist zur Halterung von einer Mehrzahl von Energiespeicherelementen in einem Batteriemodul vorgesehen. Der Zellhalter weist dabei die folgenden Merkmale auf:
a. Der Zellhalter umfasst einen ersten, insbesondere einen oberen, Zellhalterrahmen und zweiten, insbesondere einen unteren, Zellhalterrahmen.
b. Der erste Zellhalterrahmen und der zweite Zellhalterrahmen weisen jeweils mindestens einen Aufnahmebereich zur Halterung der Energiespeicherelemente auf. Insbesondere sind eine Vielzahl von Aufnahmebereichen für die Energiespeicherelemente vorgesehen. Die Aufnahmebereiche können beispielsweise napfartig ausgebildet sein.
c. Der erste Zellhalterrahmen weist mindestens eine, vorzugsweise mehrere, Auftragskavitäten zur Befüllung mit Klebstoff auf.

Weiterhin zeichnet sich der Zellhalter dadurch aus, dass
c. der erste Zellhalterrahmen mindestens eine Durchgangsöffnung für Klebstoff aufweist, und
d. der zweite Zellhalterrahmen mindestens einen Auffangkavität zur Aufnahme von Klebstoff aufweist, und
e. die Auffangkavität zur Außenseite des zweiten Zellhalterrahmens geschlossen ist.

Diese Ausgestaltung des Zellhalters erlaubt ein besonders vorteilhaftes Verfahren zur Fixierung und insbesondere zur Verklebung der Energiespeicherelemente in dem Zellhalter. Mit diesem Zellhalter kann das Verkleben der Energiespeicherelemente mit den beiden Zellhalterrahmen im Vergleich mit herkömmlichen Klebeverfahren deutlich vereinfacht werden. Die Geometrie des Zellhalters erlaubt es, dass der Klebstoff nur auf einer Seite des Zellhalters aufgebracht werden muss. Hierfür wird der Klebstoff in die Auftragskavitäten des ersten, insbesondere des oberen, Zellhalterrahmens eingebracht. Durch die Durchgangsöffnungen gelangt der Klebstoff, angetrieben durch die Schwerkraft, in die Auffangkavitäten des zweiten, insbesondere des unteren, Zellhalterrahmens und kann sich hier zur Verklebung der unteren Bereiche der Energiespeicherelemente verteilen. Insgesamt erlaubt der erfindungsgemäße Zellhalter eine Verklebung der Energiespeicherelemente sowohl in dem ersten Zellhalterrahmen als auch in dem zweiten Zellhalterrahmen, wobei der Klebestoff nur auf der Seite des oberen Zellhalterrahmens aufgetragen werden muss, sodass der Arbeits- und Dosieraufwand im Vergleich mit herkömmlichen Verfahren erheblich reduziert ist.

Insbesondere erlaubt der Zellhalter auch, dass das Kleben erst nach einer Montage der beiden Zellhalterrahmen sowie gegebenenfalls nach dem Anschweißen von Ableitern an in dem Zellhalter angeordnete Zellen sowie gegebenenfalls nach dem Einsetzen eines Verbunds aus dem Zellhalter und einer Mehrzahl von Energiespeicherelementen in ein Gehäuse erfolgen kann. Das Kleben kann einseitig erfolgen und somit Zeit und Aufwand einsparen.

Zudem ist es ein großer Vorteil, dass alle Zellen über einfache Dosierkanäle erreicht werden können und Dosiereinheiten zum Auftrag des Klebers nicht aufwändig jede einzelne Zelle beidseitig und separat anfahren müssen.

Dadurch, dass die Auffangkavität zur Außenseite des zweiten Zellhalterrahmens hin gemäß dem vorgenannten Merkmal f. geschlossen ist, wird erreicht, dass der Klebstoff über die Durchgangsöffnung von dem ersten Zellhalterrahmen zu dem zweiten Zellhalterrahmen geleitet wird und hier zwangsweise verbleibt und nicht aus dem zweiten Zellhalterrahmen heraustropfen kann. Zweckmäßigerweise ist es dabei vorgesehen, dass sich bei der Montage bzw. bei der Verklebung der Energiespeicherelemente der ersten Zellhalterrahmen oben und der zweite Zellhalterrahmen unten befindet, so dass sich der Klebstoff der Schwerkraft folgend verteilen kann.

Die geschlossene Seite der Auffangkavität kann so ausgebildet sein, dass ein Energiespeicherelement in den zweiten Zellhalter eingesetzt sein muss, um die Auftragskavität nach unten hin abzudichten.

Prinzipiell ist es möglich, dass der erste Zellhalterrahmen nur eine Auftragskavität zum Befüllen mit Klebstoff aufweist. In diesem Fall sollte der erste Zellhalterrahmen zweckmäßigerweise mit weiteren Kanälen oder Ähnlichem versehen, um den Klebstoff auf die verschiedenen Aufnahmebereiche zur Halterung der Energiespeicherelemente in dem ersten Zellhalterrahmen zu verteilen. Es ist jedoch besonders bevorzugt, dass mehrere Auftragskavitäten zur Befüllung mit Klebstoff in dem ersten Zellhalterrahmen vorgesehen sind. Insbesondere im Hinblick auf ein schnelles Aushärten des Klebstoffs ist es vorteilhaft, wenn die Verteilung des Klebstoffs nur über verhältnismäßig kurze Strecken erfolgen muss, so dass mehrere Auftragskavitäten in dieser Hinsicht vorteilhaft sind.

Weiterhin ist es prinzipiell möglich, dass nur eine Durchgangsöffnung in dem ersten Zellhalterrahmen vorgesehen ist. Bevorzugterweise sind jedoch mehreren Durchgangsöffnungen vorgesehen.

In bevorzugten Ausgestaltungen des erfindungsgemäßen Zellhalters ist mindestens eines der folgenden zusätzlichen Merkmale vorgesehen.
a. Die Auftragskavität steht mit dem Aufnahmebereich des ersten Zellhalterrahmens in Verbindung oder die Auftragskavität bildet den Aufnahmebereich des ersten Zellhalterrahmens.
b. Die Auftragskavität steht mit einem ersten Verteilungsspalt zur Verteilung von Klebstoff in Verbindung.
c. Die Auffangkavität steht mit dem Aufnahmebereich des zweiten Zellhalterrahmens in Verbindung oder die Auffangkavität bildet den Aufnahmebereich des zweiten Zellhalterrahmens.
d. Die Auffangkavität steht mit einem zweiten Verteilungsspalt zur Verteilung von Klebstoff in Verbindung.

Vorzugsweise sind die vorgenannten Merkmale a. und b. oder c. und d., oder, besonders bevorzugt, die Merkmale a. bis d. in Kombination miteinander realisiert.

Besonders bevorzugt ist es, wenn die Auftragskavität in dem ersten Zellhalterrahmen gleichzeitig den Aufnahmebereich des ersten Zellhalterrahmens bildet und/oder wenn die Auffangkavität in dem zweiten Zellhalterrahmen gleichzeitig den Aufnahmebereich des zweiten Zellhalterrahmens bildet.

Für eine stabile Verklebung der Energiespeicherelemente mit den Zellhalterrahmen ist es besonders vorteilhaft, wenn der Klebstoff den äußeren Mantel der Energiespeicherelemente in den endständigen Bereichen der Energiespeicherelemente, die mit den Aufnahmebereichen der Zellhalterrahmen in Kontakt stehen, vollumfänglich umgibt. Hierfür ist mit besonderem Vorteil in den Aufnahmebereichen der Zellhalterrahmen gemäß den vorgenannten Merkmalen b. und d. jeweils ein Verteilungsspalt für Klebstoff vorgesehen sein, der die Energiespeicherelemente umschließt. Wenn beispielsweise zylindrische Rundzellen als Energiespeicherelemente eingesetzt werden, kann der Verteilungsspalt die Energiespeicherelemente insbesondere ringförmig umgeben, so dass der Klebstoff über den gesamten Umfang des Zellmantels in diesem Bereich der Energiespeicherelemente verteilt wird.

In diesem Zusammenhang ist bei dem erfindungsgemäßen Zellhalter vorzugsweise mindestens eines der folgenden zusätzlichen Merkmale vorgesehen:
a. Der Zellhalter ist zur Halterung von Energiespeicherelementen in Form von zylindrischen Rundzellen vorgesehen,
b. die Aufnahmebereiche des ersten Zellhalterrahmens und des zweiten Zellhalterrahmens umschließen den Außenumfang der Energiespeicherelemente in endständigen Bereichen der Energiespeicherelemente.

Vorzugsweise sind die vorgenannten Merkmale a. und b. in Kombination miteinander verwirklicht.

Im bevorzugten Fall der zylindrischen Rundzellen können die Aufnahmebereiche des ersten Zellhalterrahmens und des zweiten Zellhalterrahmens den Außenumfang der Energiespeicherelemente beispielsweise ringförmig oder im Wesentlichen ringförmig umschließen. Hierbei ist mit im Wesentlichen gemeint, dass die Aufnahmebereiche den Außenumfang der Energiespeicherelemente beispielsweise auch in mehreckiger Form, beispielsweise in hexagonaler Form oder Ähnlichem umschließen können.

Zwischen dem Außenumfang der Energiespeicherelemente und der Begrenzung des Aufnahmebereichs ist vorzugsweise der Verteilungsspalt ausgebildet, der je nach Geometrie der Aufnahmebereiche und der Energiespeicherelemente eine gleichmäßige Breite oder, wie beispielsweise im Fall von zylindrischen Rundzellen und einem hexagonalen Aufnahmebereich, eine Breite mit unterschiedlicher Stärke aufweist.

Die Auftragskavität kann beispielsweise über einen Kanal mit dem ersten, insbesondere ringförmigen Verteilungsspalt verbunden sein oder in den Verteilungsspalt münden. Die Auftragskavität kann aber auch direkt als ringförmige Kavität ausgebildet sein, die den entsprechenden Bereich des Energiespeicherelements umgibt. In besonders vorteilhaften Ausführungsformen ist jedoch eine abgegrenzte Auftragskavität vorgesehen, da hierdurch die Dosierung des Klebstoffs in automatisierten Anwendungen vereinfacht werden kann.

Auch die Auffangkavität in dem zweiten Zellhalterrahmen kann ringförmig ausgebildet sein und dabei gleichzeitig den Aufnahmebereich des zweiten Zellhalterrahmens bilden. Es kann jedoch auch vorgesehen sein, dass der Klebstoff zunächst in einen abgegrenzten Bereich als Auffangkavität gelangt und dann anschließend in den zweiten Verteilungsspalt geleitet wird.

Die Aufnahmebereiche des ersten und/oder des zweiten Zellhalterrahmens können so ausgebildet sein, dass sie jeweils zur Halterung von zwei oder mehr Energiespeicherelementen vorgesehen sein können. Wenn die Energiespeicherelemente beispielsweise zylindrische Rundzellen sind und die Aufnahmebereiche zur Halterung von zwei Energiespeicherelementen vorgesehen sind, können die Aufnahmebereiche beispielsweise die Form einer liegenden Acht aufweisen. Prinzipiell ist es auch möglich, dass mehr oder weniger als zwei Energiespeicherelemente in einem Aufnahmebereich gehalten werden.

In vergleichbarer Weise eignet sich der Zellhalter auch für die Fixierung und Verklebung von prismatischen Energiespeicherelementen. In diesem Fall sollten die Aufnahmebereiche eine entsprechende Geometrie aufweisen, die die prismatische Form der Energiespeicherelemente berücksichtigt.

Vorzugsweise ist das folgende zusätzliche Merkmal vorgesehen:
a. Jeder Auffangkavität ist eine Durchgangsöffnung zugeordnet.

Insbesondere in den Ausführungsformen, in denen die Aufnahmebereiche des ersten und/oder des zweiten Zellhalterrahmens zur Halterung von zwei Energiespeicherelementen vorgesehen sind, teilen sich vorzugsweise zwei Energiespeicherelemente eine Auffangkavität mit der zugeordneten Durchgangsöffnung des ersten Zellhalterrahmens.

Im Hinblick auf die Durchgangsöffnung zeichnet sich der erfindungsgemäße Zellhalter in bevorzugten Ausgestaltungen durch das folgende zusätzliche Merkmal aus:
a. Die Durchgangsöffnung weist eine Öffnungsfläche in einem Bereich von 2 - 10 mm² auf.

Diese Öffnungsfläche der Durchgangsöffnung in dem ersten Zellhalterrahmen ist im Allgemeinen ausreichend, um eine ausreichende Menge von Klebstoff von dem ersten Zellhalterrahmen in den zweiten Zellhalterrahmen zu leiten. Andererseits ist diese Öffnungsfläche nicht zu groß, so dass nicht zu viel Klebstoff von dem ersten Zellhalterrahmen in den zweiten Zellhalterrahmen entweicht. Weiterhin wird dadurch sichergestellt, dass eine ausreichende Menge Klebstoff in dem ersten Zellhalterrahmen verbleibt, der dort für die Verklebung der Energiespeicherelemente mit dem ersten Zellhalterrahmen benötigt wird.

In bevorzugten Ausgestaltungen zeichnet sich der erfindungsgemäße Zellhalter weiterhin durch das folgende zusätzliche Merkmal aus.
a. Der Zellhalter besteht im Wesentlichen aus Kunststoff.

Im Allgemeinen ist es bevorzugt, wenn die Zellhalterrahmen, die den Zellhalter bilden, vollständig aus Kunststoff gebildet sind. Es können jedoch gegebenenfalls auch noch weitere Komponenten in dem Zellhalter enthalten sein, die nicht aus Kunststoff bestehen. Der Zellhalter besteht daher vorzugsweise im Wesentlichen aus Kunststoff und nicht zwingend vollständig aus Kunststoff. Es können beispielsweise Metallelemente, z. B. Schrauben, Ableiterelemente oder anderes, in dem Zellhalter vorgesehen sein. Beispielsweise können Schraubverbindungen vorgesehen sein, die den ersten Zellhalterrahmen und den zweiten Zellhalterrahmen aneinander befestigen oder die zur Fixierung des Zellhalters in einem Gehäuse des Batteriemoduls vorgesehen sind.

Die Zellhalterrahmen können beispielsweise in an sich bekannter Weise als Kunststoffspritzgussteile gefertigt sein. Als Kunststoffmaterial eignen sich vor allem thermoplastische Kunststoffe, die dem Fachmann in diesem Zusammenhang bekannt sind.

Um die Auffangkavität oder die Auffangkavitäten zur Außenseite des zweiten Zellhalterrahmens zu schließen, kann in diesen Bereichen eine Kunststoffschicht in der Geometrie des zweiten Zellhalterrahmens vorgesehen sein. Prinzipiell ist es jedoch auch möglich, die Auffangkavitäten zur Außenseite des zweiten Zellhalterrahmens auf andere Weise zu verschließen, beispielsweise durch abdichtende Folien oder Ähnliches.

Die Erfindung umfasst weiterhin ein Verfahren zur Fixierung von Energiespeicherelementen in dem beschriebenen zweiteiligen Zellhalter. Dieses Verfahren umfasst die folgenden Schritte:
a. Die Energiespeicherelemente werden in die Aufnahmebereiche des ersten und des zweiten Zellhalterrahmens eingesetzt,
b. die Energiespeicherelemente werden mit dem ersten und dem zweiten Zellhalterrahmen verklebt, indem ein Klebstoff in flüssiger Form in die mindestens einen Auftragskavität des ersten Zellhalterrahmens eingebracht wird, sodass der Klebestoff die Durchgangsöffnung des ersten Zellhalterrahmens passiert und in die mindestens eine Auffangkavität des zweiten Zellhalterrahmens gelangt.

Gemäß dem erfindungsgemäßen Verfahren ist ein besonders einfaches und vorteilhaftes Verkleben der Energiespeicherelemente in ihren jeweiligen endständigen Bereichen mit den beiden Zellhalterrahmen möglich. Dabei wird der Klebstoff nur auf einer Seite der Anordnung von Energiespeicherelementen und zweiteiligem Zellhalter aufgebracht, wobei der Klebstoff über die Durchgangsöffnungen des ersten Zellhalterrahmens in den zweiten Zellhalterrahmen gelangt und sich dort in den Aufnahmebereichen für die Energiespeicherelemente verteilen kann. Der Klebstoffauftrag erfolgt also nur auf einer Seite der Anordnung, so dass die Anzahl der Dosiervorgänge erheblich reduziert werden kann. Zudem entfällt ein Wenden der Anordnung, da der Klebstoff nicht separat auf der unteren Seite des Zellhalters appliziert werden muss. Im Zuge des Klebeverfahrens verteilt sich der Klebstoff von dem oberen Zellhalterrahmen zu dem unteren Zellhalterrahmen infolge der Schwerkraft, wobei der Klebstoff vorzugsweise entlang der Energiespeicherelemente von oben nach unten läuft.

Die Dosierung des Klebstoffs kann beispielsweise in durchgehenden Bahnen auf der Außenseite des ersten Zellhalterrahmens erfolgen. Hierdurch ist eine deutlich verringerte Anzahl von Schaltvorgängen in der Dosiereinrichtung möglich, wodurch der Verschleiß der Dosiereinrichtung reduziert wird. Darüber hinaus sind im Vergleich mit herkömmlichen Verfahren weniger Positioniervorgänge bei der Dosiereinrichtung erforderlich, so dass eine schnellere Verarbeitung möglich ist. Insgesamt erlaubt das erfindungsgemäße Verfahren eine Verklebung der Energiespeicherelemente mit beiden Zellhalterrahmen, wobei der Klebstoff nur auf einer Seite aufgetragen wird.

Die Verteilung des Klebstoffs von dem ersten Zellhalterrahmen in den zweiten Zellhalterrahmen erfolgt zwangsläufig nach dem Befüllen der Auftragskavität oder der Auftragskavitäten in dem ersten Zellhalterrahmen mittels der Schwerkraft, wobei der Klebstoff entlang der einzelnen Energiespeicherelemente von oben nach unten läuft und die untenliegende Auffangkavität füllt. Von hier verteilt sich der Klebstoff in die Aufnahmebereiche, um so die Energiespeicherelemente auch in dem unteren Zellhalterrahmen zu verkleben.

Im Zuge der Montage kann es vorgesehen sein, dass der erste und der zweite Zellhalterrahmen miteinander verschraubt oder verklebt werden, um so den Zellhalter zu schließen. Dieses Schließen des Zellhalters wird vorzugsweise vor dem Verkleben der Energiespeicherelemente vorgenommen.

Die weiteren, besonderen Vorteile und Ausgestaltungen des Klebeverfahrens zur Fixierung der Energiespeicherelemente in dem erfindungsgemäßen Zellhalter wurden oben bereits anhand der Beschreibung des Zellhalters selbst erläutert. Bezüglich der besonderen Ausgestaltungen und Vorteile des erfindungsgemäßen Verfahrens wird daher auch auf die obige Beschreibung verwiesen.

Für das erfindungsgemäße Klebeverfahren können im Prinzip für derartige Anwendungen übliche Klebstoffe verwendet werden. Vorzugsweise zeichnet sich der Klebstoff durch mindestens eines der folgenden zusätzlichen Merkmale aus:
a. Der Klebstoff ist thermisch leitfähig und weist vorzugsweise eine thermische Leitfähigkeit in einem Bereich von 0,5 bis 5 W/m*K auf,
b. der Klebstoff weist eine Viskosität in einem Bereich von 3.000 bis 7.000 Pa*s, vorzugsweise 5.000 Pa*s, auf,
c. der Klebstoff ist ein Einkomponentenklebstoff,
d. der Klebstoff ist ein Zweikomponentenklebstoff.

Vorzugsweise sind die vorgenannten Merkmale a. und b. in Kombination miteinander realisiert. Die vorgenannten Merkmale c. und d. sind als Alternativen zu verstehen, sodass in einer bevorzugten Ausführungsform die vorgenannten Merkmale a., b. und c., und in einer anderen bevorzugten Ausführungsform die vorgenannten Merkmale a., b. und d. in Kombination miteinander realisiert sind.

Die genannte thermische Leitfähigkeit des Klebstoffs gemäß dem vorgenannten Merkmal a. ist besonders vorteilhaft, da hierdurch eine gegebenenfalls auftretende Wärmeentwicklung in den Energiespeicherelementen nach außen, beispielsweise in Richtung eines Gehäuses des Batteriemoduls, besonders gut abgeleitet werden kann.

Die genannte Viskosität des Klebstoffs gemäß dem vorgenannten Merkmal b. ist besonders vorteilhaft, da durch diese Viskosität sichergestellt wird, dass der Klebstoff im Zuge des Fixierungsverfahrens von dem ersten Zellhalterrahmen in den zweiten Zellhalterrahmen laufen kann, ohne dass der Klebstoff sich zu früh verfestigt. Der Kleber sollte die Eigenschaft haben, sich gut zu verteilen und kleine Spaltmaße zu erreichen und zu füllen. Eine für diesen Zweck besonders geeignete Viskosität liegt insbesondere in einem Bereich von 4.000 bis 6000 Pa*s. Solche Klebstoffe können auch als niedrigviskose Klebstoffe bezeichnet werden.

In besonders bevorzugten Ausführungsformen ist der Klebstoff im ausgehärteten Zustand dauerelastisch und zäh. Hierdurch wird erreicht, dass eine besonders stabile Fixierung, d.h. Verklebung, der Energiespeicherelemente in den Zellhalterrahmen erreicht wird, wobei dennoch eine gewisse Elastizität gewährleistet ist, um bei auftretenden Erschütterungen oder Ähnlichem nicht zu einem Bruch in der Klebstoffmasse zu führen.

Der Kleber sollte vorteilhafterweise schnell aushärtend sein, damit in der Produktion keine großen Pufferbereiche/Wartezonen entstehen und das Batteriepack nach dem Aushärten gedreht werden kann.

Weiterhin sollte der Klebstoff flammwidrig sein.

Besonders geeignet sind als Klebstoff 2-Komponenten Vergußharze auf Basis Polyurethan. Ebenfalls geeignet sind aber auch Silikon- und Epoxidharze.

Im Allgemeinen ist es erforderlich, dass in einem Batteriemodul die Energiespeicherelemente mit Ableiterelementen, insbesondere mit metallischen Ableiterelementen, kontaktiert sind. Hierfür können beispielsweise geschnittene Blechstreifen oder Blechplatten verwendet werden, die auf der Ober- und/oder Unterseite des Batteriemoduls mit den Energiespeicherelementen elektrisch kontaktiert werden. Ein besonderer Vorteil des erfindungsgemäßen Verfahrens mit dem einseitigen Kleberauftrag ist, dass in besonders bevorzugten Ausführungsformen die elektrische Kontaktierung der Energiespeicherelemente mit den Ableiterelementen vor der Verklebung der Energiespeicherelemente erfolgen kann. Die Verklebung kann also als ein später Schritt in der Montage erfolgen, wobei insbesondere die elektrische Kontaktierung der Energiespeicherelemente schon abgeschlossen sein kann. Kritische Prozesse, wie beispielsweise das Schweißen der Energiespeicherelemente, die Montage von Elektronikbauteilen, eine Erstinbetriebnahme und Funktionsprüfungen können dabei bereits erfolgt sein. Die Verklebung kann vorzugsweise als letzter Schritt dieses Montageabschnitts erfolgen, so dass bis zur Verklebung noch Nacharbeiten möglich sind und der Ausschuss reduziert wird.

Darüber hinaus erlaubt der Klebevorgang zu einem solch späten Zeitpunkt in der Montage noch weitere besonders vorteilhafte Nutzungsmöglichkeiten des Klebstoffs.

Insbesondere kann der Klebstoff zusätzlich als Dichtmittel beispielsweise für Stecker oder Ähnliches verwendet werden.

Zudem kann der Klebstoff als Befestigungsmittel von Kabelsätzen oder Ähnlichem verwendet werden.

Weiterhin kann der Klebstoff zur Sicherung von elektrischen Steckkontakten gegen Vibration und/oder als Schraubensicherung eingesetzt werden.

Darüber hinaus erlaubt die Verklebung gemäß dem erfindungsgemäßen Verfahren die Herstellung einer thermisch leitfähigen Verbindung zwischen verschiedenen Bauteilen, beispielsweise zwischen Busbars und Gehäuse oder zwischen Energiespeicherelementen und Temperatursensoren oder zwischen Halbleitern und Kühlkörpern.

Weiterhin kann die Verklebung zum Füllen von Taschen in einem Gehäuse des Batteriemoduls dienen, um so Pufferzonen herzustellen.

Weiterhin können Schraubtaschen mit Klebstoff gefüllt werden, um so einen Manipulationsschutz zu gewährleisten.

Die Erfindung umfasst weiterhin einen Verbund von einem Zellhalter mit einem ersten Zellhalterrahmen und einem zweiten Zellhalterrahmen gemäß der obigen Beschreibung und mit einer Mehrzahl von Energiespeicherelementen, die mit den Zellhalterrahmen in der oben beschriebenen Weise verklebt sind. Eine solche Anordnung von Energiespeicherelementen in einem Zellhalter wird auch als Zellblock bezeichnet.

Dieser Verbund zeichnet sich vorzugsweise durch mindestens eines der folgenden zusätzlichen Merkmale aus.
a. Die Energiespeicherelemente sind zylindrische Rundzellen,
b. die Energiespeicherelemente sind in zwei oder mehr parallelen Reihen angeordnet,
c. die Energiespeicherelemente sind mit paralleler Ausrichtung ihrer jeweiligen Längsachsen nebeneinander angeordnet,
d. die Energiespeicherelemente sind in dem Zellhalter mit alternierender Polarität angeordnet.

Vorzugswiese sind die vorgenannten Merkmale a. und b. in Kombination miteinander realisiert. Besonders bevorzugt sind die vorgenannten Merkmale a. bis c., und ganz besonders bevorzugt die vorgenannten Merkmale a. bis d., in Kombination miteinander realisiert.

Wenn die Energiespeicherelemente, beispielsweise die zylindrischen Rundzellen, gemäß dem vorgenannten Merkmal d. mit alternierender Polarität nebeneinander angeordnet sind, ist es zweckmäßig, wenn auf beiden Seiten der Energiespeicherelemente, also im Bereich von beiden Zellhalterrahmen, jeweils Ableiterelemente vorgesehen sind, um die Energiespeicherelemente elektrisch zu kontaktieren.

In anderen Ausgestaltungen kann es vorgesehen sein, dass alle Energiespeicherelemente, insbesondere alle zylindrischen Rundzellen, von ausschließlich einer Seite elektrisch kontaktiert werden, wobei die Zellen in diesem Fall zweckmäßigerweise mit gleicher Polarität nebeneinander angeordnet sind. In diesem Fall sind die zylindrischen Rundzellen vorzugsweise so ausgebildet, dass sie das Abgreifen sowohl des Pluspols als auch des Minuspols von einer Seite erlauben, beispielsweise über einen Pol-Pin und die Zellschulter auf der entsprechenden Seite der Rundzelle. In diesem Fall sind auf nur einer Seite der Anordnung, beispielsweise auf der Seite des ersten Zellhalterrahmens, Ableiterelemente zur elektrischen Kontaktierung erforderlich.

Vorzugsweise sind die Energiespeicherelemente Lithium-Ionen-Zellen.

In besonders bevorzugten Ausgestaltungen zeichnet sich der erfindungsgemäße Verbund durch mindestens eines der folgenden zusätzlichen Merkmale aus:
a. Im Bereich des ersten Zellhalterrahmens umfasst der Verbund mindestens ein flächiges Ableiterelement,
b. das flächige Ableiterelement ist mit mindestens einer Aussparung als Durchlassöffnung für Klebstoff ausgestattet,
c. die Aussparung weist eine Form auf, die sich in Längsrichtig relativ zu einem Laststromfluss durch das Ableiterelement erstreckt.

Vorzugsweise sind die vorgenannten Merkmale a. und b. und, besonders bevorzugt, die vorgenannten Merkmale a. bis c. in Kombination miteinander verwirklicht.

Bei dem flächigen Ableiterelement kann es sich beispielsweise um ein oder mehrere streifenförmige Ableiterbleche oder Ableiterplatten handeln. Wenn diese Ableiterelemente oder das Ableiterelement gemäß dem vorgenannten Merkmal b. mit einer oder mehreren Aussparungen ausgebildet sind, die als Durchlassöffnung für Klebstoff dienen können, ist es möglich, dass diese Ableiterelemente bereits montiert werden können, bevor der Klebstoff appliziert wird. Diese Ausgestaltung der flächigen Ableiterelemente erlaubt also einen Klebevorgang in einem späten Stadium der Montage, was mit den oben bereits erläuterten Vorteilen verbunden ist.

Die Aussparungen können gemäß dem vorgenannten Merkmal c. vorzugsweise als Schlitze oder sonstige Perforierungen in Längsrichtung relativ zu dem Laststromfluss durch den Ableiter ausgebildet sein. Hierdurch wird zum einen eine Durchdringung mit Klebstoff ermöglicht. Zum anderen wird hierdurch nicht der Laststromfluss durch die Ableiterelemente beeinträchtigt.

Die Erfindung umfasst weiterhin ein Batteriemodul, das mindestens einen Verbund gemäß dieser Beschreibung umfasst. Das Batteriemodul umfasst demgemäß eine Anordnung von Energiespeicherelementen, die in einem zweiteiligen Zellhalter gemäß der oben beschriebenen Geometrie des Zellhalters fixiert und verklebt sind. Hierbei sind die Energiespeicherelemente sowohl mit dem ersten Zellhalterrahmen als auch mit dem zweiten Zellhalterrahmen verklebt, wobei die Verklebung so erfolgt ist, dass der Klebstoff nur im Bereich des ersten Zellhalterrahmens appliziert wurde.

Das Batteriemodul kann in bevorzugten Ausgestaltungen mit einem Gehäuse versehen sein, beispielsweise einem metallischen Gehäuse aus Aluminium oder anderem in an sich bekannter Weise.

Ein solches Batteriemodul kann beispielsweise für Automobilanwendungen oder für eine stationäre Energiespeicherung eingesetzt werden.

Die Erfindung umfasst auch einen Verbund aus mehreren Batteriemodulen, wobei die einzelnen Batteriemodule jeweils mit einem eigenen Gehäuse ausgestattet sein können.

Schließlich umfasst die Erfindung ein Verfahren zur Montage eines Batteriemoduls, wobei im Zuge der Montage eine Anordnung eines zweiteiligen Zellhalters mit der oben beschriebenen Geometrie und mit einer Mehrzahl von Energiespeicherelementen verwendet wird, wobei diese Anordnung gemäß dem oben beschriebenen Verfahren verklebt wird.

Weitere Merkmale und Vorteile der Erfindung ergeben sich aus der nachfolgenden Beschreibung von bevorzugten Ausführungsbeispielen in Verbindung mit den Zeichnungen. Hierbei können die einzelnen Merkmale jeweils für sich oder in Kombination miteinander realisiert sein.

### KURZE BESCHREIBUNG DER ZEICHNUNGEN

In den Zeichnungen zeigen:
- Fig. 1: Aufsicht auf eine Anordnung von Energiespeicherelementen in einem zweiteiligen Zellhalter (Zellblock) gemäß der Erfindung;
- Fig. 2: Aufsicht auf den Zellblock aus Fig. 1 mit Ableiterelementen;
- Fig. 3: schematischer Querschnitt durch einen zweiteiligen Zellhalter mit Energiespeicherelementen gemäß einer bevorzugten Ausführungsform der Erfindung;
- Fig. 4: fotographische Darstellung eines zweiteiligen Zellhalters mit Energiespeicherelementen gemäß der Erfindung; und
- Fig. 5: Ausschnitt aus der Darstellung aus Fig. 4.

### BESCHREIBUNG VON AUSFÜHRUNGSBEISPIELEN

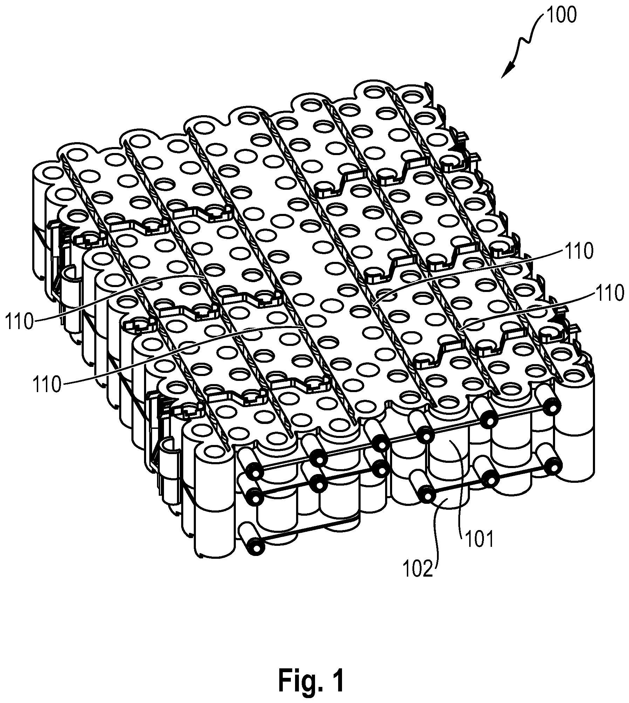

**Fig. 1** illustriert einen zweiteiligen Zellhalter gemäß der Erfindung, der zusammen mit einer Vielzahl von Energiespeicherelementen in Form von zylindrischen Rundzellen eine Anordnung 100 bzw. einen Zellblock bildet. Der Zellhalter wird von einem ersten, oberen Zellhalterrahmen 101 und einem zweiten, unteren Zellhalterrahmen 102 gebildet. Die Zellhalterrahmen 101 und 102 umgreifen die jeweiligen oberen und unteren Bereiche der Energiespeicherelemente. Der erste Zellhalterrahmen 101 und der zweite Zellhalterrahmen 102 weisen hierfür entsprechend geformte napfartige Aufnahmebereiche für die einzelnen Energiespeicherelemente auf.

Bei herkömmlichen Zellblöcken mit einem zweiteiligen Zellhalter ist in der Regel eine beidseitige Verklebung der Energiespeicherelemente vorgesehen, wobei der obere Bereich der Energiespeicherelemente mit einem oberen Zellhalterrahmen und der untere Bereich der Energiespeicherelemente mit einem unteren Zellhalterrahmen verklebt sind. Für diese Verklebung ist es in der Regel vorgesehen, dass vor oder nach dem Einsetzen der einzelnen Energiespeicherelemente in die entsprechenden Aufnahmebereiche der Zellhalterrahmen der Klebstoff punktuell hinzugefügt wird. Hierfür sind eine Vielzahl von Positionier- und Dosieroperationen erforderlich. Zudem ist in der Regel ein Wenden des Zellblocks notwendig, um eine Verklebung auf der Unterseite des Zellblocks vornehmen zu können.

Im Gegensatz dazu ist der erfindungsgemäße Zellhalter so ausgebildet, dass der Auftrag des Klebstoffs ausschließlich von der oberen Seite im Bereich des ersten Zellhalterrahmens 101 erfolgen kann. Hierfür sind mehrere Auftragskavitäten 110 in dem oberen Zellhalterrahmen 101 vorgesehen, die zur Befüllung mit Klebstoff vorgesehen sind. Die Auftragskavitäten 110 sind beispielsweise kanalartig mit einer Längserstreckung auf der oberen Außenseite des Zellhalterrahmens 101 ausgebildet.

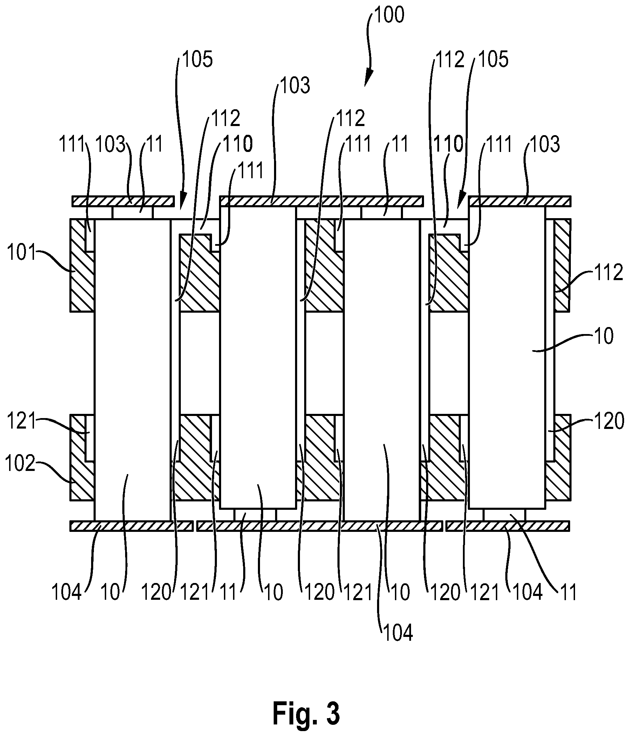

Wie es insbesondere anhand der Fig. 3 weiter unten näher erläutert wird, ist die Geometrie des zweiteiligen Zellhalters derart ausgestaltet, dass der aufgetragene Klebstoff sich von dem oberen Zellhalterrahmen 101 aus in den unteren Zellhalterrahmen 102, also von oben nach unten, verteilen kann, sodass im Ergebnis die einzelnen Energiespeicherelemente sowohl mit dem oberen Zellhalterrahmen 101 als auch mit dem unteren Zellhalterrahmen 102 verklebt werden können.

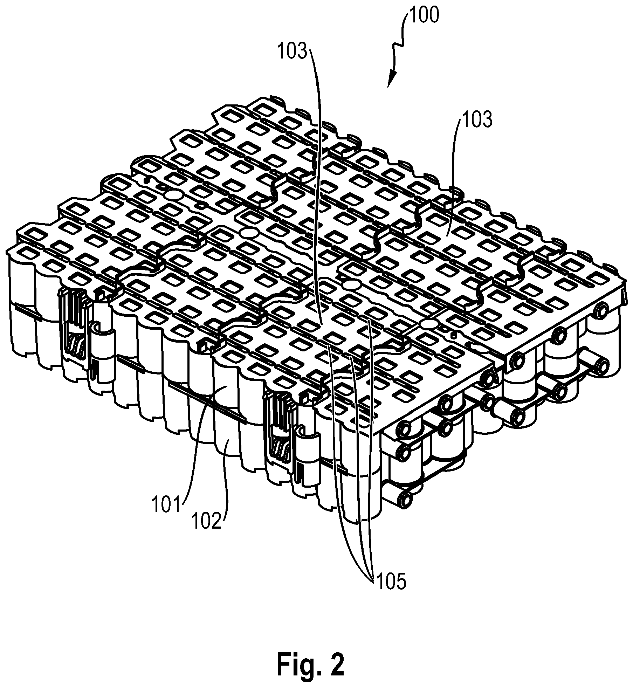

**Fig. 2** zeigt den Zellblock bzw. die Anordnung 100 aus Fig. 1, wobei zusätzlich auf der Oberseite des Zellblocks plattenförmige Ableiterelemente 103 (Ableiterbleche) angeordnet sind. Auch auf der Unterseite des Zellblocks können plattenförmige Ableiterelemente vorgesehen sein. Zur elektrischen Kontaktierung der Energiespeicherelemente werden die Energiespeicherelemente mit den Ableiterelementen in der Regel verschweißt.

Die Ableiterelemente 103 weisen jeweils mehrere schlitzartige Aussparungen 105 auf, wobei die Ableiterelemente 103 in dieser Ausführungsform als geschlitzte Ableiterplatten ausgebildet sind. Die Aussparungen 105 liegen jeweils im Bereich der Auftragskavitäten 110 des darunter liegenden, ersten Zellhalterrahmens 101. Die Aussparungen 105 erlauben es, dass der Klebstoff auch nach der bereits erfolgten Montage der Ableiterelemente 103, also nach dem Verschweißen der Ableiterelemente mit den Energiespeicherelementen, aufgetragen wird. Hierfür wird der Klebstoff im Bereich der Aussparungen 105 appliziert und gelangt auf diese Weise in die Auftragskavitäten 110 der ersten Zellhalterrahmens 101.

**Fig. 3** zeigt einen Querschnitt durch die Anordnung 100 mit dem erfindungsgemäßen zweiteiligen Zellhalter und mehreren Energiespeicherelementen 10 in Form von zylindrischen Rundzellen. Der Zellhalter wird von dem ersten, oberen Zellhalterrahmen 101 und dem zweiten, unteren Zellhalterrahmen 102 gebildet. Die Zellhalterrahmen 101, 102 umfassen jeweils Aufnahmebereiche für die zwischen den Zellhalterrahmen 101, 102 positionierten und fixierten Energiespeicherelemente 10.

Die elektrische Kontaktierung der Energiespeicherelemente 10 erfolgt im oberen Bereich der Anordnung mit den flächigen Ableiterelementen 103 und im unteren Bereich der Anordnung mit weiteren flächigen Ableiterelementen 104.

Die Energiespeicherelemente 10 sind in diesem Ausführungsbeispiel mit alternierender Polarität nebeneinander mit paralleler Ausrichtung ihrer Längsachsen angeordnet, wobei sich ein Pol-Pin 11 der Energiespeicherelemente jeweils abwechselnd oben oder unten befindet.

Der obere und der untere Zellhalterrahmen 101, 102 sind so ausgebildet, dass die Verklebung der Energiespeicherelemente 10 sowohl an dem ersten Zellhalterrahmen 101 als auch an dem zweiten Zellhalterrahmen 102 erfolgt. Der Auftrag des Klebstoffs erfolgt ausschließlich von der oberen Seite im Bereich des ersten Zellhalterrahmens 101. Hierfür sind in dieser Ausführungsform in dem oberen Zellhalterrahmen 101 mehrere Auftragskavitäten 110 vorgesehen, die zur Befüllung mit Klebstoff vorgesehen sind. Die Auftragskavität 110 ist mit einem oberen (ersten) Verteilungsspalt 111 verbunden, der einen oberen Abschnitt der Energiespeicherelemente 10 ringförmig umgibt.

Weiterhin ist der erste Zellhalterrahmen 101 mit mehreren Durchgangsöffnungen 112 versehen, über die der aufgetragene Klebstoff aus der Auftragskavität 110 entlang der Energiespeicherelemente 10 in eine Auffangkavität 120 des zweiten, unteren Zellhalterrahmens 102 laufen kann. Die Auffangkavität 120 ist mit einem umlaufenden (zweiten) Verteilungsspalt 121 verbunden, der einen unteren Abschnitt der Energiespeicherelemente 10 ringförmig umschließt. Die Auffangkavität 120 und auch der umlaufende Verteilungsspalt 121 sind zur unteren Außenseite des zweiten Zellhalterrahmens 102 geschlossen und werden gleichzeitig durch die eingesetzten Energiespeicherelemente 10 abgedichtet, so dass der Klebstoff nicht nach unten auslaufen kann.

Im oberen Bereich weist das Ableiterelement 103 im Bereich der Auftragskavitäten 110 jeweils eine Aussparung 105 als Durchlassöffnung für den aufzutragenden Klebstoff auf. Dies hat den besonderen Vorteil, dass der Klebstoff in einer späten Montagephase aufgebracht werden kann, nachdem kritische Prozesse, wie z. B. das Verschweißen der Energiespeicherelemente 10 mit den Ableiterelementen 103, 104, sowie die Montage von Elektronikbauteilen und verschiedenen Funktionsprüfungen bereits abgeschlossen sind.

Für die Verklebung kann die benötigte Klebstoffmenge in einem oder gegebenenfalls in mehreren Durchgängen durch Befüllung der Auftragskavitäten 110 erfolgen. Dabei verteilt sich der Klebstoff zum einen in dem Verteilungsspalt 111 des ersten Zellhalterrahmens 101 und fixiert damit einen oberen Abschnitt der Energiespeicherelemente 10. Zum anderen durchläuft der Klebstoff die Durchgangsöffnung 112, die in Form eines Kanals ausgebildet sein kann. Der Klebstoff gelangt dabei der Schwerkraft folgend entlang der äußeren Wandung der Energiespeicherelemente 10 in die Auffangkavität 120 des zweiten Zellhalterrahmens 102. Er verteilt sich dabei in dem unteren Verteilungsspalt 121 und fixiert somit einen unteren Abschnitt der Energiespeicherelemente 10. Nach dem Aushärten des Klebstoffs sind damit sowohl der obere Abschnitt als auch der untere Abschnitt der Energiespeicherelemente 10 in den jeweiligen Aufnahmebereichen bzw. in dem Bereich der Verteilungsspalte 111 und 121 mit dem jeweiligen Zellhalterrahmen 101, 102 verklebt.

Der Übersichtlichkeit halber ist ein gegebenenfalls vorgesehenes Gehäuse, das den mit den Energiespeicherelementen bestückten Zellhalter umgibt, nicht dargestellt. In der Regel weist ein erfindungsgemäßes Batteriemodul mit der hier illustrierten Anordnung der Energiespeicherelemente in dem Zellhalter ein solches Gehäuse auf. Gegebenenfalls können auch mehrere bestückte Zellhalter (Zellblöcke) in einem Gehäuse vorgesehen sein.

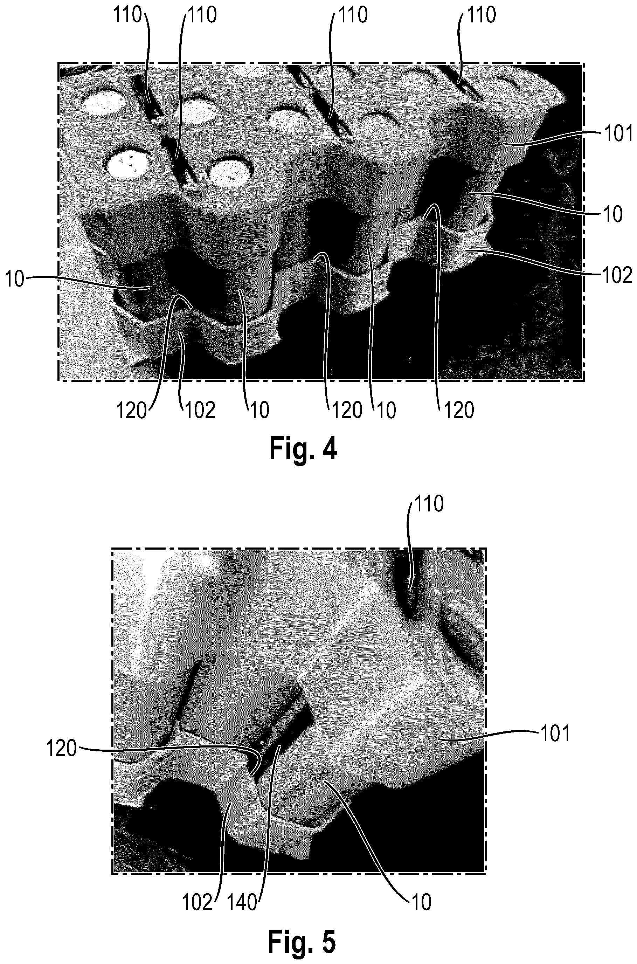

**Fig. 4** zeigt eine fotografische Darstellung einer Versuchsanordnung zur Illustrierung des erfindungsgemäßen zweiteiligen Zellhalters und des Klebeverfahrens. Die zylindrischen Rundzellen als Energiespeicherelemente 10 sind zwischen dem oberen Zellhalterrahmen 101 und dem unteren Zellhalterrahmen 102 eingesetzt. Der obere Zellhalterrahmen 101 weist mehrere schlitzförmige Auftragskavitäten 110 auf, in die der Klebstoff eingefüllt wird. Nach dem Auftragen verteilt sich der Klebstoff zum einem ersten (oberen), hier nicht sichtbaren Verteilungsspalt, der den jeweiligen oberen Bereich der Energiespeicherelemente 10 umgibt. Zum anderen durchwandert der Klebstoff die Strecke von der Auftragskavität 110 entlang der Energiespeicherelemente 10 bis zu der Auffangkavität 120 im unteren Zellhalterrahmen 102. Hier verteilt sich der Klebstoff in dem zweiten (unteren) Verteilungsspalt des unteren Zellhalterrahmens 102, der den unteren Bereich der Energiespeicherelemente 10 umgibt.

**Fig. 5** zeigt einen Teilausschnitt aus der Anordnung der Fig. 4. Gut zu erkennen ist der Verlauf des Klebstoffs als dunkler Streifen 140 entlang des Energiespeicherelements 10. Entlang des Streifens 140 verteilt sich der Klebstoff von der Auftragskavität 110 im oberen Zellhalterrahmen bis zur Auffangkavität 120 im unteren Zellhalterrahmen 102.

## Patentansprüche

1. Zellhalter zur Halterung von einer Mehrzahl von Energiespeicherelementen (10) in einem Batteriemodul mit den folgenden Merkmalen:
a. Der Zellhalter umfasst einen ersten Zellhalterrahmen (101) und zweiten Zellhalterrahmen (102),
b. der erste Zellhalterrahmen (101) und der zweite Zellhalterrahmen (102) weisen jeweils mindestens einen Aufnahmebereich zur Halterung der Energiespeicherelemente (10) auf,
c. der erste Zellhalterrahmen (101) weist mindestens eine Auftragskavität (110) zur Befüllung mit Klebstoff auf,
wobei
d. der erste Zellhalterrahmen (101) mindestens eine Durchgangsöffnung (112) für Klebstoff aufweist, und
e. der zweite Zellhalterrahmen (102) mindestens einen Auffangkavität (120) zur Aufnahme von Klebstoff aufweist, und
f. die Auffangkavität (120) zur Außenseite des zweiten Zellhalterrahmens (102) geschlossen ist.

2. Zellhalter nach Anspruch 1 mit mindestens einem der folgenden zusätzlichen Merkmale:
a. Die Auftragskavität (110) steht mit dem Aufnahmebereich des ersten Zellhalterrahmens (101) in Verbindung oder die Auftragskavität (110) bildet den Aufnahmebereich des ersten Zellhalterrahmens (101),
b. die Auftragskavität (110) steht mit einem ersten Verteilungsspalt (111) zur Verteilung von Klebstoff in Verbindung,
c. die Auffangkavität (120) steht mit dem Aufnahmebereich des zweiten Zellhalterrahmens (102) in Verbindung oder die Auffangkavität (120) bildet den Aufnahmebereich des zweiten Zellhalterrahmens (102),
d. die Auffangkavität (120) steht mit einem zweiten Verteilungsspalt (121) zur Verteilung von Klebstoff in Verbindung.

3. Zellhalter nach Anspruch 1 oder Anspruch 2 mit mindestens einem der folgenden zusätzlichen Merkmale:
a. Der Zellhalter ist zur Halterung von Energiespeicherelementen (10) in Form von zylindrischen Rundzellen vorgesehen,
b. die Aufnahmebereiche des ersten Zellhalterrahmens (101) und des zweiten Zellhalterrahmens (102) umschließen den Außenumfang der Energiespeicherelemente (10) in endständigen Bereichen der Energiespeicherelemente (10).

4. Zellhalter nach einem der vorhergehenden Ansprüche mit dem folgenden zusätzlichen Merkmal:
a. Jeder Auffangkavität (120) ist eine Durchgangsöffnung (112) zugeordnet.

5. Zellhalter nach einem der vorhergehenden Ansprüche mit dem folgenden zusätzlichen Merkmal:
a. Die Durchgangsöffnung (112) weist eine Öffnungsfläche in einem Bereich von 2 - 10 mm² auf.

6. Zellhalter nach einem der vorhergehenden Ansprüche mit dem folgenden zusätzlichen Merkmal:
a. Der Zellhalter besteht im Wesentlichen aus Kunststoff.

7. Verfahren zur Fixierung von Energiespeicherelementen (10) in einem zweiteiligen Zellhalter gemäß einem der Ansprüche 1 bis 6, wobei das Verfahren die folgenden Schritte umfasst:
a. Die Energiespeicherelemente (10) werden in die Aufnahmebereiche des ersten und des zweiten Zellhalterrahmens (101, 102) eingesetzt,
b. die Energiespeicherelemente (10) werden mit dem ersten und dem zweiten Zellhalterrahmen (101, 102) verklebt, indem ein Klebstoff in flüssiger Form in die mindestens einen Auftragskavität (110) des ersten Zellhalterrahmens (101) eingebracht wird, sodass der Klebestoff die Durchgangsöffnung (112) des ersten Zellhalterrahmens (101) passiert und in die mindestens eine Auffangkavität (120) des zweiten Zellhalterrahmens (102) gelangt.

8. Verfahren nach Anspruch 7 mit mindestens einem der folgenden zusätzlichen Merkmale:
a. Der Klebstoff ist thermisch leitfähig und weist vorzugsweise eine thermische Leitfähigkeit in einem Bereich von 0,5 bis 5 W/m*K auf,
b. der Klebstoff weist eine Viskosität in einem Bereich von 3.000 bis 7.000 Pa*s, vorzugsweise 5.000 Pa*s, auf,
c. der Klebstoff ist ein Einkomponentenklebstoff,
d. der Klebstoff ist ein Zweikomponentenklebstoff.

9. Verfahren nach Anspruch 7 oder Anspruch 8 mit dem folgenden zusätzlichen Verfahrensschritt:
a. Eine elektrische Kontaktierung der Energiespeicherelemente (10) mit Ableiterelementen (103, 104) erfolgt vor der Verklebung der Energiespeicherelemente mit dem ersten und dem zweiten Zellhalterrahmen (101, 102).

10. Verbund von einem Zellhalter mit einem ersten Zellhalterrahmen (101) und einem zweiten Zellhalterrahmen (102) gemäß einem der Ansprüche 1 bis 6 und einer Mehrzahl von Energiespeicherelementen (10), wobei die Energiespeicherelemente mit beiden Zellhalterrahmen verklebt sind.

11. Verbund nach Anspruch 10 mit mindestens einem der folgenden zusätzlichen Merkmale:
a. Die Energiespeicherelemente (10) sind zylindrische Rundzellen,
b. die Energiespeicherelemente (10) sind in zwei oder mehr parallelen Reihen angeordnet,
c. die Energiespeicherelemente (10) sind mit paralleler Ausrichtung ihrer jeweiligen Längsachsen nebeneinander angeordnet,
d. die Energiespeicherelemente (10) sind in dem Zellhalter mit alternierender Polarität angeordnet.

12. Verbund nach Anspruch 10 oder 11 mit mindestens einem der folgenden zusätzlichen Merkmale:
a. Im Bereich des ersten Zellhalterrahmens (101) umfasst der Verbund mindestens ein flächiges Ableiterelement (103),
b. das flächige Ableiterelement (103) ist mit mindestens einer Aussparung (105) als Durchlassöffnung für Klebstoff ausgestattet,
c. die Aussparung (105) weist eine Form auf, die sich in Längsrichtig relativ zu einem Laststromfluss durch das Ableiterelement erstreckt.

13. Batteriemodul, **dadurch gekennzeichnet, dass** das Batteriemodul mindestens einen Verbund gemäß einem der Ansprüche 10 bis 12 umfasst.
